(19) Europäisches Patentamt / European Patent Office / Office européen des brevets

(11) **EP 4 715 422 A1**

(12) **DEMANDE DE BREVET EUROPEEN**

(43) Date de publication:
**25.03.2026 Bulletin 2026/13**

(21) Numéro de dépôt: **25191358.8**

(22) Date de dépôt: **23.07.2025**

(51) Classification Internationale des Brevets (IPC):
*G01S 7/40* (2006.01)   *G01S 13/86* (2006.01)
*G01S 13/91* (2006.01)   *G06T 7/70* (2017.01)
*G08G 1/01* (2006.01)   *G08G 1/04* (2006.01)

(52) Classification Coopérative des Brevets (CPC):
**G01S 13/867; G01S 7/4091; G01S 13/91;
G06T 7/70; G08G 1/0116; G08G 1/04**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **19.09.2024 FR 2409999**

(71) Demandeur: **IDEMIA Road Safety France
92400 Courbevoie (FR)**

(72) Inventeurs:
• **GUIDON, Eric
92400 COURBEVOIE (FR)**
• **CARRION, Grégoire
92400 COURBEVOIE (FR)**
• **HARBI, Rachid
92400 COURBEVOIE (FR)**
• **SUBECZ, Thomas
92400 COURBEVOIE (FR)**
• **ALLIOT, Samuel
92400 COURBEVOIE (FR)**

(74) Mandataire: **Plasseraud IP
104 Rue de Richelieu
CS92104
75080 Paris Cedex 02 (FR)**

(54) **PROCÉDÉ DE CALIBRATION D'UN DISPOSITIF DE CONTRÔLE ROUTIER**

(57) Procédé (500) de calibration d'un dispositif (101) de contrôle routier comprenant une caméra (201) et un radar (202), le procédé (500) comprenant les étapes suivantes :
- estimer (501) les paramètres de position et d'orientation de la caméra (201) et du radar (202) dans un repère (O, x, y, z) lié à une voie (102a) d'une route (102) ;
- acquérir (502), par la caméra (201) et le radar (202), les données relatives à la trajectoire d'au moins un même véhicule (103) sur voie (102a) de la route (102) ;
- déterminer (503), d'une part, une trajectoire caméra du véhicule (103) dans le repère (O, x, y, z) lié à la voie (102,a) de la route (102) à partir des données acquises par la caméra (201) et des paramètres de position et d'orientation estimés, et d'autre part, une trajectoire radar du véhicule (103) dans le repère (O, x, y, z) lié à la voie (102,a) de la route (102) à partir des données acquises par le radar (202) et des paramètres de position et d'orientation estimés ;
- calculer (504), à partir de la trajectoire caméra et de la trajectoire radar, de valeurs corrigées d'au moins certains des paramètres de position et d'orientation estimés de la caméra (201), incluant un paramètre d'angle, e, d'élévation et un paramètre de hauteur, h, de ladite caméra (201).

EP 4 715 422 A1

## Description

## Domaine technique

La présente divulgation concerne un procédé de calibration d'un dispositif de contrôle routier comprenant une caméra et un radar, et un dispositif de contrôle routier configuré pour mettre en œuvre ce procédé. La présente divulgation s'applique en particulier à la calibration de dispositifs de contrôle routier mobiles, notamment ceux qui peuvent être placés à des emplacements géographiques variables dans le temps, en fonction des besoins d'utilisation de ces dispositifs.

## Technique antérieure

Les dispositifs de contrôle routier récents comprennent, outre un radar, une caméra dont la résolution et la largeur de champ permettent de réaliser un suivi de trajectoire des véhicules dans le flux d'images. Pour qu'un véhicule soit considéré en infraction, il est généralement requis qu'il soit détecté à la fois par le radar et par la caméra, et que les trajectoires du véhicule acquises par le radar et par la caméra doivent être cohérentes.

Pour être exploitables, les données acquises par la caméra, en particulier les positions successives du véhicule dans les images obtenues par la caméra, doivent être converties en données de position du véhicule dans un repère lié à la route. Or, les conditions d'utilisation des dispositifs de contrôle routier sont telles que la caméra est proche du sol avec une orientation rasante, c'est-à-dire située à faible hauteur avec un angle d'élévation également faible. Dans ces conditions, il est nécessaire de déterminer les valeurs des paramètres d'élévation et de hauteur de façon très précise, car une incertitude sur ces valeurs peut se propager de façon importante sur la détermination de la position du véhicule dans le repère lié à la route. Par exemple, une incertitude de quelques dixièmes de degrés sur l'angle d'élévation peut représenter une erreur sur la position du véhicule de plusieurs mètres.

Cette problématique se pose d'autant plus pour les dispositifs de contrôle routier mobiles. En effet, pour un dispositif destiné à être opéré à un emplacement fixe, on peut déterminer avec précision la topographie du site et donc déterminer avec précision les paramètres de positionnement de la caméra.

FR 3096786 A1 [IDEMIA IDENTITY & SECURITY FRANCE [FR]] 04.12.2020 décrit un procédé de détermination de position et d'orientation d'une caméra d'un dispositif de contrôle routier par rapport à une route, requérant l'utilisation d'un tachéomètre. Ceci n'est cependant pas compatible avec les contraintes opérationnelles des dispositifs de contrôle routier mobiles, qui peuvent être déplacés, par exemple tous les jours voire plusieurs fois par jour, dans des emplacements différents.

FR 3131777 A1 [IDEMIA IDENTITY & SECURITY FRANCE [FR]] 14.07.2023 décrit un procédé d'alignement d'une caméra aux abords d'une route, notamment pour des dispositifs de contrôle routier mobile, qui permet d'estimer les paramètres de position et d'orientation de la caméra par rapport à la route.

## Résumé

Un but de la présente divulgation est de proposer un procédé de calibration d'un dispositif de contrôle routier permettant une estimation plus précise des paramètres de hauteur et d'élévation de la caméra d'un tel dispositif, c'est-à-dire une estimation précise au dixième de mètre et au dixième de degré, respectivement.

Dans un premier aspect de l'invention, il est fourni un procédé de calibration d'un dispositif de contrôle routier comprenant une caméra et un radar, le procédé comprenant les étapes suivantes :

- estimer les paramètres de position et d'orientation de la caméra et du radar dans un repère $(O, x, y, z)$ lié à une voie d'une route ;
- acquérir, par la caméra et le radar, les données relatives à la trajectoire d'au moins un même véhicule sur voie de la route ;
- déterminer, d'une part, une trajectoire caméra du véhicule dans le repère $(O, x, y, z)$ lié à la voie de la route à partir des données acquises par la caméra et des paramètres de position et d'orientation estimés, et d'autre part, une trajectoire radar du véhicule dans le repère $(O, x, y, z)$ lié à la voie de la route à partir des données acquises par le radar et des paramètres de position et d'orientation estimés ;
- calculer, à partir de la trajectoire caméra et de la trajectoire radar, les valeurs corrigées d'au moins certains des paramètres de position et d'orientation estimés de la caméra, incluant un paramètre d'angle, e, d'élévation et un paramètre de hauteur, h, de ladite caméra.

Selon certains modes de réalisation, la trajectoire radar et la trajectoire caméra comprennent chacune des données de position du véhicule dans le repère $(O, x, y, z)$ lié à la voie de la route, acquises à des instants d'acquisition respectifs, et l'étape de calcul des valeurs corrigées des paramètres comprend une sous-étape de correction des données de position du véhicule de la trajectoire radar et de la trajectoire caméra pour des instants d'acquisition identiques.

Selon certains modes de réalisation, le radar et la caméra présentent des fréquences d'acquisition de données différentes, et la sous-étape de correction comprend une interpolation de l'une de la trajectoire cinémomètre et/ou de la trajectoire caméra de sorte que les deux trajectoires comprennent des données de position correspondant à des instants d'acquisition identiques.

Selon certains modes de réalisation, l'étape de calcul comprend le calcul des valeurs corrigées d'angle, e, d'élévation et de hauteur, h, et ledit procédé comprend une étape de mise à jour de la valeur de l'un au moins d'une distance, d, de rive et d'un angle, r, de roulis de la caméra à partir desdites valeurs corrigées.

Selon certains modes de réalisation, la trajectoire caméra et la trajectoire radar comprennent chacune une série temporelle de positions du véhicule selon un axe [Ox) du repère (O, x, y, z) lié à la voie de la route, l'axe [Ox) étant tangent à un bord de la voie de la route, et l'étape de calcul des valeurs corrigées comprend le calcul de valeurs corrigées pour l'angle, e, d'élévation et de la hauteur, h, de la caméra, et une sous-étape de minimisation des écarts de position entre les séries temporelles le trajectoire camera et de la trajectoire radar.

Selon certains modes de réalisation, la trajectoire caméra et la trajectoire radar comprennent chacune une série temporelle de distances du véhicule par rapport au dispositif de contrôle routier, et l'étape de calcul des valeurs corrigées pour les paramètres de position et d'orientation de la caméra comprend une sous-étape de minimisation à de cette distance sur l'ensemble desdites séries temporelles.

Selon certains modes de réalisation, l'étape de calcul des valeurs corrigées comprend les sous-étape suivantes :

- calculer une quantité D1(t)*H2/D2(t) en fonction de D1(t), où D1(t) est la séquence temporelle de distances du véhicule par rapport au dispositif de contrôle routier fournie par le radar, D2(t) est la séquence temporelle de distances du véhicule par rapport au dispositif de contrôle routier fournie par la caméra, et H2 est la hauteur estimée de la caméra ;

- modéliser la quantité D1(t)*H2/D2(t) en fonction de D1(t) par une fonction affine ;

- calculer un correctif sur l'angle, e, d'élévation à l'aide de la valeur du coefficient directeur de la fonction affine, la valeur corrigée de la hauteur, h, de la caméra à partir de l'ordonnée à l'origine de la fonction affine.

Dans un deuxième aspect de l'invention, il est fourni un programme d'ordinateur, comprenant des instructions qui, lorsqu'elles sont exécutées par une unité de traitement de données, conduisent ledit dispositif à mettre en œuvre le procédé de code pour la mise en œuvre un procédé comprenant les étapes suivantes :

- estimer de paramètres de position et d'orientation de la caméra et du radar dans un repère (O, x, y, z) lié à une voie d'une route ;

- commander la caméra et le radar pour acquérir, par la caméra et le radar, de données relatives à la trajectoire d'au moins un même véhicule sur voie de la route ;

- déterminer, d'une part, une trajectoire caméra du véhicule dans le repère (O, x, y, z) lié à la voie de la route à partir des données acquises par la caméra et des paramètres de position et d'orientation estimés, et d'autre part, une trajectoire radar du véhicule dans le repère (O, x, y, z) lié à la voie de la route à partir des données acquises par le radar et des paramètres de position et d'orientation estimés ;

- calculer, à partir de la trajectoire caméra et de la trajectoire radar, de valeurs corrigées d'au moins certains des paramètres de position et d'orientation estimés de la caméra, incluant un paramètre d'angle, e, d'élévation et un paramètre de hauteur, h, de ladite caméra.

Dans un troisième aspect de l'invention, il est fourni un dispositif de contrôle routier, comprenant une caméra, un radar, et une unité de traitement, le dispositif de contrôle routier étant configuré pour mettre en œuvre le procédé de calibration selon l'un des quelconques modes de réalisation décrits précédemment.

Le procédé selon l'invention permet de déterminer précisément la hauteur et l'angle d'élévation de la caméra à partir de trajectoires d'un ou plusieurs véhicules, acquises par le radar et la caméra. Les données de position d'un véhicule acquises par un radar tel que, par exemple, un radar de type Doppler ou LIDAR sont peu, voire ne sont pas, sensible à la hauteur et à l'angle d'élévation du radar, contrairement à une caméra. En se fondant sur les données du radar, il est alors possible de corriger les paramètres de position et d'orientation de la caméra afin que les données de position du véhicule acquises par la caméra concordent avec les données de position du véhicule acquises par le radar. Une précision au dixième de degré près pour l'angle d'élévation de la caméra peut être ainsi atteinte, et au centième de mètre pour la hauteur.

**Brève description des dessins**

[Fig. 1] est une représentation schématique d'une route contrôlée au moyen d'une dispositif de contrôle routier.

[Fig. 2] est une représentation schématique d'un dispositif de contrôle routier selon un mode de réalisation.

[Fig. 3] est une représentation schématique de la caméra dans un repère orthonormé (O, x, y, z) lié à la route selon le plan (x, y).

[Fig. 4] est une représentation schématique d'une caméra dans un repère orthonormé (O, x, y, z) lié à la route selon le plan (x, z).

[Fig. 5] est un ordinogramme d'un procédé de calibration d'un dispositif de contrôle routier selon un premier mode de réalisation.

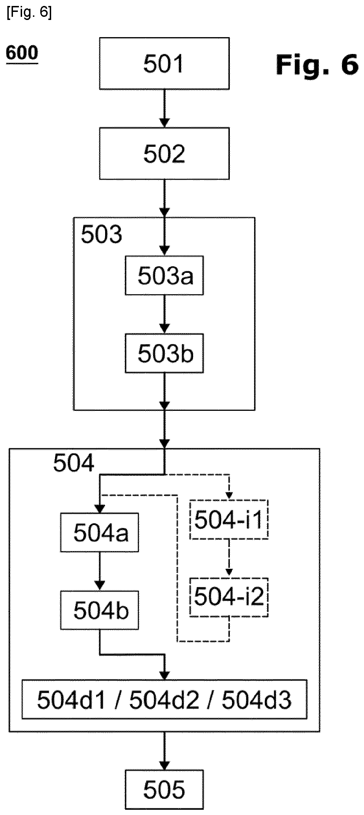

[Fig. 6] est un ordinogramme d'un procédé de calibration d'un dispositif de contrôle routier selon un deuxième mode de réalisation.

[Fig. 7] est un exemple de représentation graphique de la trajectoire, en fonction du temps, d'un même véhicule selon la caméra et selon le cinémomètre du dispositif de contrôle routier, chaque trajectoire étant formée d'une série temporelle de positions du véhicule selon un axe tangent à un bord de la route.

[Fig. 8] est une représentation graphique des trajectoires de la Fig. 6 après correction des paramètres de position et d'orientation de la caméra à l'aide d'un procédé selon l'invention.

[Fig. 9] est une représentation schématique de la distance d'un véhicule par rapport au dispositif de contrôle routier.

[Fig. 10] est une représentation graphique des distances, en fonction du temps, d'un même véhicule par rapport au dispositif de contrôle routier, tel que déterminées par le radar (cercles vides) ou la caméra (croix).

[Fig. 11] est une représentation graphique du rapport D1*H2/D2 en fonction D1 et de sa modélisation par une fonction affine, où D1 et D2 sont respectivement les séquences temporelles de distances de la Fig. 9, et H2 est la hauteur estimée de la caméra du dispositif de contrôle routier.

**Description détaillée d'au moins un mode de réalisation**

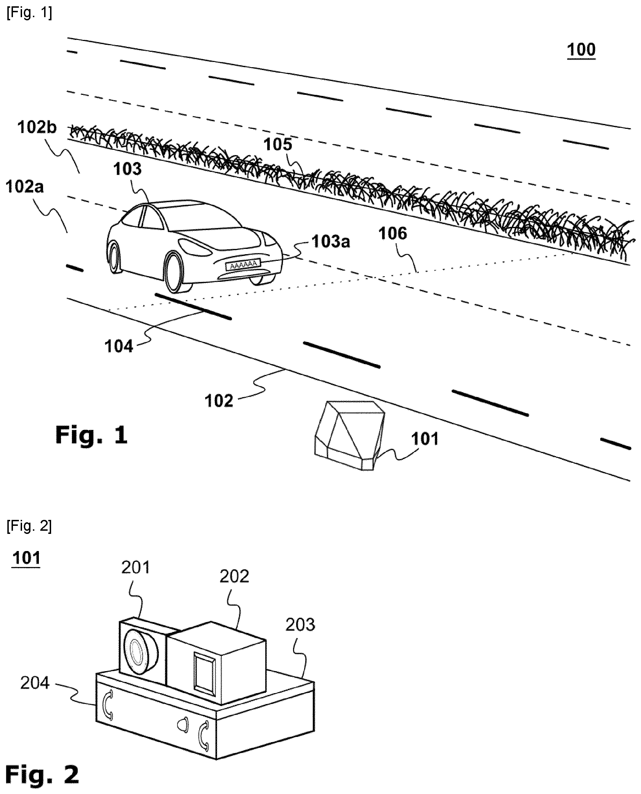

En référence à la **Fig.** 1, en exemple d'environnement routier **100,** un dispositif **101** de contrôle routier est positionné aux abords d'une route **102** sur laquelle circule un véhicule **103** muni d'une plaque **103a** d'immatriculation. La route **102** peut être tout type d'espace de circulation autorisant la circulation des véhicules, par exemple, une autoroute, une rue, un chemin... Dans l'exemple de la Fig. 1, la route **102** comprend deux voies **102a, 102b** de circulation, délimitées par divers marquages **104** appliqués sur la surface de la route **102** et/ou éléments **105** de séparation tels qu'un terre-plein central. Les marquages **104** se présentent généralement sous la forme de balisages constitué de signes visuels tels qu'une ligne continue, une ligne discontinue, ou encore des plots.

En général, le dispositif **101** de contrôle est orienté vers une ligne d'infraction **106** ayant fonction de ligne de référence pour le contrôle de vitesse. Cette ligne d'infraction **106** est généralement d'une ligne virtuelle dont la position est déterminée lors de l'installation de l'unité **101** de contrôle. Dans certains cas d'usage, elle peut correspondre à une ligne de feux ou une ligne de stop.

En référence à la **Fig. 2,** le dispositif **101** de contrôle routier comprend une caméra **201** et un radar **202**. La caméra **201** et le radar **202** sont adaptés pour pouvoir être positionnés au bord d'une route, de sorte à être capables d'acquérir des données relatives à la trajectoire de véhicules circulant sur une portion de la route. A cet égard, la caméra **201** et le radar **202** sont fixés sur un support **203**. La position et l'orientation relative de la caméra par rapport au radar sont considérées connues et fixes au moins pendant les périodes d'acquisition des données.

Dans des modes de réalisation, le dispositif de contrôle routier **101** est mobile, c'est-à-dire que le support **203,** la caméra **201** et le radar **202** sont déplaçables d'un emplacement à un autre en fonction des besoins d'utilisation du dispositif **201** de contrôle routier. Le support 203 est généralement configuré pour être posé sur un trépied ou fixé à un châssis.

Par « radar », il est entendu tout dispositif exploitant les ondes électromagnétiques qui permet de détecter la présence d'un objet et déterminer sa position dans l'espace, et éventuellement sa vitesse. Des exemples de « radar » adaptés à un dispositif de contrôle routier sont le radar à effet Doppler et le LIDAR.

Les mesures de position d'un radar 202 sont généralement insensibles à sa hauteur et a son angle d'élévation. Les données relatives à la trajectoire d'un véhicule **103** suivi par un radar **202** comprennent la position du véhicule selon un axe radial défini entre ledit véhicule et le radar. La vitesse du véhicule **103** peut être calculée à partir de l'angle d'azimut entre l'axe radial er le vecteur vitesse dudit véhicule **103.**

Dans des modes de réalisation, le dispositif **101** de contrôle routier comprend en outre un contrôleur **204.** Le contrôleur **204** comprend un ou plusieurs processeurs pour le traitement des données et signaux nécessaires au fonctionnement du dispositif **101** de contrôle routier. Il comprend en outre une mémoire de stockage non-transitoire de données, par exemple de type quelconque par exemple Flash, EEPROM, HDD, SDD, ... Il peut aussi être connecté à une interface utilisateur (non représentée) pour faciliter la configuration du dispositif **101** de contrôle routier par un opérateur. Il peut en outre être connectée à un dispositif de communication (non représenté) pour transmettre des données collectées lors de la surveillance de la route **102** à un serveur distant. Le contrôleur **204** est généralement configuré pour actionner la caméra **201** et/ou le radar **202,** et éventuellement traiter les données acquises par la caméra **201** et le radar **202.**

Le contrôleur **204** peut également être configuré pour mettre en œuvre le procédé selon l'invention. A cet effet, des instructions de code d'un programme d'ordinateur peuvent être stockées dans sa mémoire de stockage non-transitoire, lesdites instructions, lorsqu'elles sont exécutées par un ou plusieurs de ses processeurs, mettent en œuvre le procédé selon l'invention.

Selon certains modes de réalisation, au lieu du contrôleur **204,** le procédé est mis en œuvre par une unité de traitement située à distance, par exemple, sur un serveur distant communiquant avec le contrôleur **204** par l'intermédiaire d'un réseau de télécommunication.

Le procédé de calibration du dispositif de contrôle routier permet avantageusement d'effectuer une calibration fine des paramètres de positionnement de la caméra 201 dans un repère lié à la voie **102a** de la route **102,** et en particulier des paramètres de hauteur et d'élévation de la caméra 201. Le procédé est mis en œuvre une fois le dispositif **101** de contrôle routier positionné au bord d'une route **102** sur laquelle circulent les véhicules 103 à contrôler. Le dispositif **101** de contrôle routier est positionné au bord de la route **102** de sorte que la caméra **201** et le radar **202** soient orientés vers la voie **102a** de la route **102** à surveiller, et puissent ainsi acquérir des données relatives à la trajectoire des véhicules **103**. Dans les images acquises par la caméra **201,** une partie de la voie **102a** de la route **102** au niveau de la ligne **106** d'infraction est visible.

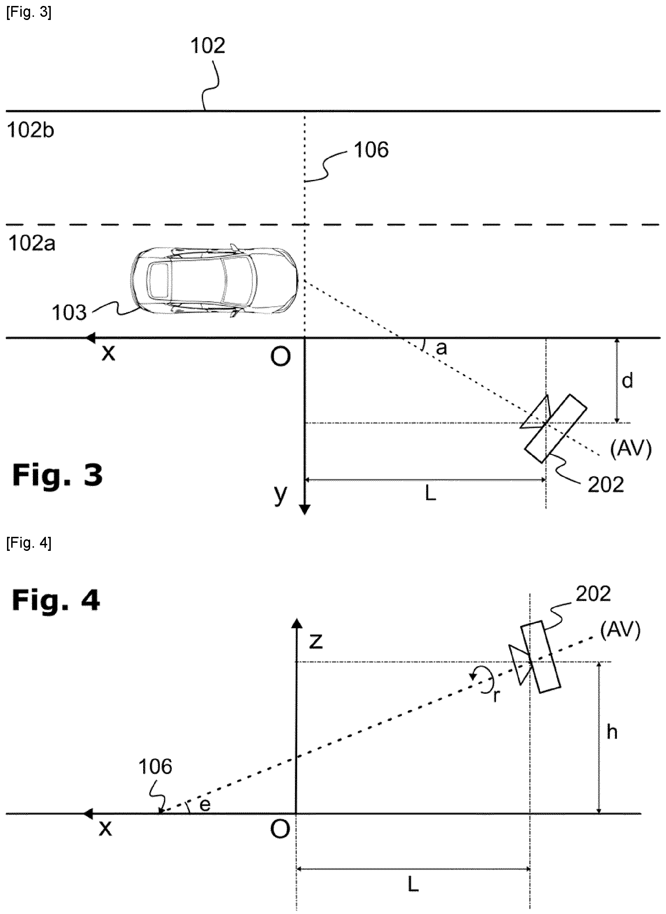

En référence aux **Fig. 3 & 4,** la position et l'orientation de la caméra **201** sont respectivement représentées par des paramètres de position et d'orientation dans un repère **(O, x, y, z)** lié à la voie **102a** de la route **102.** Pour des raisons de simplification, le radar **202** n'est pas représenté.

Le repère **(O, x, y, z)** lié à la voie **102a** de la route **102** est un repère orthonormé direct tel que :

- L'axe **[Ox)** est tangent à l'un des deux bords de la route **102** et est compris dans le plan de la voie **102a** de la route **102,**

- L'axe **[Oy)** est compris dans le plan de la route **102,**

- L'axe **[Oz)** est orthogonal au plan de la route **102.**

L'origine **O** du repère est telle que la caméra **201** a une position au sol selon les coordonnées **(-L, d, h),** où **(-L, d et h)** sont les paramètres de position de la caméra **201** tels que :

- **L** est une constante prédéfinie, correspondant généralement à la distance à la ligne d'infraction **106** - cette distance est fixée arbitrairement, par exemple égale à 28m ;

- **d** représente la distance de rive, c'est-à-dire la distance entre la caméra **201** et le bord de la route **102,** en particulier au bord de la route le plus proche de la caméra **201,** selon l'axe **[Oy)** - cette distance peut être initialement estimée ;

- **h** est la hauteur de la caméra **201** par rapport à la route **102** - cette hauteur peut être initialement estimée par un opérateur.

Les paramètres d'orientation de la caméra **201** dans le repère **(O, x, y, z)** lié à la route 102 sont :

- L'azimut, **a,** correspondant à l'angle entre l'axe **(AV)** de visée de la caméra **201** et l'axe **[Ox)** tangent à la route **102** ;

- Le roulis, **r,** correspondant à un angle de la caméra **201** autour de son axe **(AV)** de visée ; et

L'élévation, e, correspondant à l'angle entre l'axe **(AV)** de visée de la caméra **201** et le plan de la voie **102a** de la route **102.**

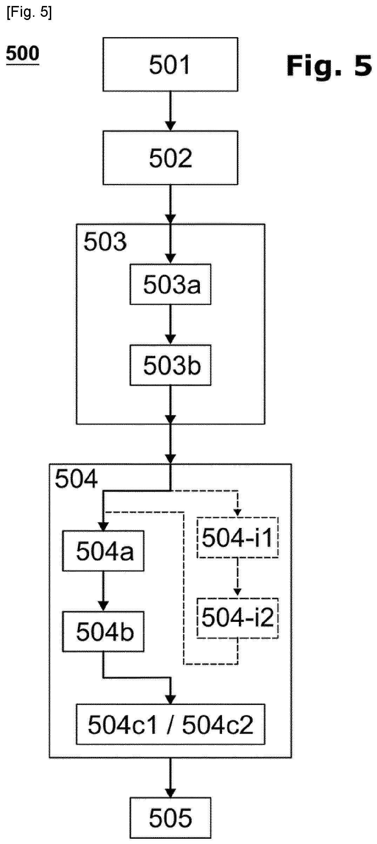

En référence à la **Fig. 5,** le procédé **500** comprend une première étape d'estimation **501** des paramètres de positionnement et d'orientation de la caméra **201** et du radar **202** dans le repère **(O, x, y, z)** lié à la route **102,** de sorte à disposer d'une valeur initiale pour chacun desdits paramètres. En particulier, la valeur du paramètre **L** étant fixée, est réalisée une estimation initiale de l'angle d'élévation **e,** de l'angle d'azimut **a,** de l'angle de roulis **r,** de la distance, **d,** de rive **d** et de la hauteur **h.**

Avantageusement, l'étape **501** d'estimation des paramètres de position et d'orientation de la caméra **201** peut être mise en œuvre à l'aide d'un procédé tel que celui décrit dans FR 3131777 A1 [IDEMIA IDENTITY & SECURITY FRANCE [FR]] 14.07.2023. Dans ce procédé, l'estimation des paramètres, repose, d'une part, sur un modèle de route rectiligne, et, d'autre part, sur deux courbes paramétriques, par exemple des B-splines, représentant les bords de ladite route et visibles dans l'image acquise par la caméra. Les paramètres sont déterminés de sorte que le modèle de courbe rectiligne corresponde à la route représentée sur l'image et dont les bords sont modélisés par les courbes paramétriques.

Dans des modes de réalisation, la distance, d, de rive et la hauteur, h, sont estimés par l'opérateur, et le procédé décrit dans FR 3131777 A1 [IDEMIA IDENTITY & SECURITY FRANCE [FR]] 14.07.2023 est uniquement utilisé pour l'estimation des valeurs des paramètres d'orientation **(a, e, r).** En variante, la distance, **d,** de rive et la hauteur, **h,** peuvent faire l'objet d'une première estimation par l'opérateur, puis le procédé décrit dans FR 3131777 A1 [IDEMIA IDENTITY & SECURITY FRANCE [FR]] 14.07.2023 être utilisé pour affiner 'cette première estimation et pour estimer les paramètres d'orientation **(a, e, r).**

En outre, la position et l'orientation relatives du radar **202** par rapport à la caméra **201** sont considérées connues (déterminées lors du montage en usine). Les paramètres de positionnement du radar **202** dans le repère **(O, x, y, z)** de la voie **102a** de la route **102** peuvent être déterminée à partir de ceux de la caméra **201.**

Le procédé comprend ensuite une étape **502** d'acquisition, par la caméra **201** et le radar **202,** de données relatives à la trajectoire d'au moins un même véhicule **103** sur la voie **102a** de route **102.** De manière générale, plus le nombre de véhicules dont la trajectoire est suivie est élevée, plus la calibration sera précise et stable. De préférence, en pratique, les données de trajectoire sont acquises pour au moins deux véhicules ou plus, par exemple entre deux et dix véhicules.

Les données acquises par la caméra **201** lors de l'étape **502** peuvent comprendre une succession d'images représentant le véhicule **103** circulant sur la voie **102a** de la route **102**. Ces données peuvent être acquises à la fréquence d'échantillonnage de la caméra **201**.

Lors de l'étape **502** d'acquisition, les données acquises par le radar **202**, par exemple dans le cas d'un radar à effet Doppler, peuvent comprendre une série de vitesses radiales du véhicule **103** par rapport à l'axe de visée **(AV)** du radar **202**.

Les données acquises par la caméra **201** et le radar **202** sont horodatées.

Le procédé comprend une étape **503** de détermination des trajectoires du ou de chaque véhicule **103** dans le repère **(O, x, y, z)** lié à la route **102**, à partir des données acquises d'une part par la caméra **201** et d'autre part par le radar **202**. Cette étape **503** comprend, pour chaque véhicule, deux sous-étapes :

- une sous-étape **503a** de détermination d'une première trajectoire, appelée « trajectoire caméra », du véhicule **103** dans le repère **(O, x, y, z)** lié à la route **102** à partir des données acquises par la caméra **201** et des paramètres estimés de position et d'orientation de la caméra **201** lors de l'étape **501** d'estimation ;

- une sous-étape **503b** de détermination d'une deuxième trajectoire, appelée « trajectoire radar », du même véhicule **103**, dans le repère **(O, x, y, z)** lié à la route **102**, à partir des données acquises par le radar **202** et de ses paramètres connus de de position et d'orientation, par exemple, dans le cas d'un radar à effet Doppler, de son angle d'azimut et de ses positions selon les axes **[Ox)** et **[Oy)** dans le repère **(O, x, y, z)** lié à la route **102**.

La trajectoire radar et la trajectoire caméra comprennent chacune des données de position du véhicule **103** dans le repère **(O, x, y, z)** lié à la route **102**, et plus précisément des séquences temporelles de données de position dans ce repère.

Ces données de position sont déterminées, de façon connue de l'Homme du Métier, à partir des données acquises par la caméra **201** et par le radar **202** à l'aide d'opérations de changement de repère. Ces opérations de changement de repère sont réalisées sur la base des paramètres de position et d'orientation estimés à l'étape **501** et des paramètres intrinsèques propres au modèle de la caméra **201** et du radar **202**. A titre d'exemple, pour la caméra **201**, le changement de repère comprend une succession de changements de repère depuis la position du véhicule **103** dans l'image acquise par la caméra **102** vers le repère **(O, x, y, z)** lié à la route **102**.

Le procédé comprend ensuite une étape **504** de calcul, à partir de la trajectoire caméra et de la trajectoire radar, de valeurs corrigées d'au moins certains des paramètres de position et d'orientation estimés de la caméra **201**, incluant au moins des valeurs corrigées pour l'angle, **e,** d'élévation et la hauteur, **h,** de ladite caméra **201**.

Dans des modes de réalisation, l'étape **504** de calcul comprend uniquement un calcul de valeurs corrigées de l'angle, **e,** d'élévation et de la hauteur, **h,** de la caméra **201**. En variante, elle comprend une sous-étape **504a** de calcul de valeurs corrigées de l'angle, **e,** d'élévation et de la hauteur, **h,** et une sous-étape **504b** de correction d'autres paramètres de position et d'orientation de la caméra **201,** pouvant inclure la distance, **d,** de rive et/ou l'angle, **r,** de roulis, à partir des valeurs corrigées de l'angle, **e,** d'élévation et de la hauteur, **h.** La distance **L** à la ligne d'infraction **106,** étant fixée arbitrairement, n'est pas recalculée. L'angle d'azimut, **a,** étant le paramètre de positionnement à partir duquel est dérivée la trajectoire radar qui sert de référence pour la trajectoire caméra, n'est pas recalculé non plus.

Comme indiqué précédemment, la trajectoire radar et la trajectoire caméra comprennent chacune une ou plusieurs séquences temporelles de données de position du véhicule **103** dans le repère **(O, x, y, z)** lié à la route **102**. Dans des modes de réalisation, l'étape **504** de calcul de valeurs corrigées pour les paramètres de position et d'orientation est implémentée à partir d'une comparaison entre les données de position du véhicule **103** obtenues par le radar **202** et celles obtenues par la caméra **201**. Ces données de position correspondent à des instants d'acquisition identiques. Par « comparaison », il est entendu toute opération adaptée permettant de déterminer un écart entre deux données.

Dans certains cas, notamment lorsque la caméra **201** et le radar **202** ont des fréquences d'acquisition différentes, la trajectoire radar et la trajectoire caméra peuvent comprendre des données de position du véhicule **103** correspondant à des temps d'acquisition différents. L'étape **504** de calcul peut alors comprendre une sous-étape préliminaire **504-i1** de correction afin que les deux trajectoires comprennent des données de position du véhicule correspondant à des instants d'acquisition identiques, et ainsi qu'elles deviennent comparables. Cette sous-étape **504i-1** de correction peut notamment comprendre une interpolation de l'une ou l'autre des trajectoires radar et caméra. En général, une interpolation est réalisée pour la trajectoire dont la fréquence d'acquisition est la plus faible. Par « correction », il est entendu toute opération adaptée de réduction ou d'annulation d'un écart entre deux données.

Dans des modes de réalisation, l'étape **504** peut en outre comprendre une sous-étape préliminaire **504-i2** de limitation de la séquence temporelle de données acquises par le radar **202** de manière qu'elle correspond à un intervalle de positions données selon l'axe **[Ox)**. Elle peut également comprendre la limitation de la séquence temporelle de données acquises par la caméra **201** afin qu'elle corresponde à la même séquence temporelle que celle du radar **202**. Ainsi, les données traitées dans la suite du procédé sont réduites aux seules données effectivement pertinentes.

Dans un premier mode de réalisation, les données de position du véhicule **103** dans le repère **(O, x, y, z)** lié à la route **102** comprennent une série temporelle de positions dudit véhicule **103** selon l'axe **[Ox)** du repère **(O, x, y, z)** lié à la route **102**. L'étape **504** de calcul des valeurs corrigées pour l'angle, **e,** d'élévation et de la hauteur, **h,** de la caméra **201,** et comprend alors une sous-étape **504c1** de minimisation des écarts entre la série temporelle de la trajectoire caméra et la série temporelle de la trajectoire radar.

Dans des modes de réalisation, une métrique de la distance entre les positions du véhicule **103** selon l'axe **[Ox)** obtenues d'une part par la caméra **201** et d'autre part par le radar 202 est déterminée. L'étape **504** de calcul des valeurs corrigées de l'angle, e, d'élévation et de la hauteur, **h,** de la caméra **201,** comprend alors une sous-étape **504c2** de minimisation de cette distance sur toute la série temporelle ou, dans le cas de plusieurs véhicules, sur l'ensemble des séries temporelles.

La métrique utilisée peut par exemple être la somme quadratique des distances euclidiennes entre les coordonnées selon l'axe **[Ox)** à chaque instant t d'acquisition, pour respectivement la caméra **201** et le radar **202.** En variante, d'autres distances peuvent être envisagées, comme la distance de Manhattan (ou distance **L1),** ou la distance de Mahalanobis.

La détermination des valeurs d'angle, **e,** d'élévation et de la hauteur, **h,** minimisant la métrique déterminée peut par exemple être réalisée à l'aide d'une fonction de recherche d'un minimum global sur une fonction à plusieurs variables (en l'occurrence deux variables correspondant à l'angle d'élévation et à la hauteur), ou par des boucles itératives imbriquées en faisant varier successivement la hauteur et l'élévation d'un pas déterminé. Le pas peut par exemple être compris entre 0,005° et 0,05° pour l'angle d'élévation, de préférence entre 0,005 et 0,02°, et entre 0,005 m et 0,05 m pour la hauteur, de préférence entre 0,005 m et 0, 02 m.

Avantageusement, le procédé comprend une étape **505** de mise à jour de l'angle, **r,** de roulis et de la distance, **d,** de rive, une fois les valeurs de la hauteur, **h,** et de l'angle, **e,** d'élévation sont corrigées à l'aide des valeurs corrigées calculés à l'étape **504.** Cette mise à jour réalisée en réitérant le procédé décrit dans FR 3131777 A1 [IDEMIA IDENTITY & SECURITY FRANCE [FR]] 14.07.2023, où tous les paramètres autres que l'angle, r, de roulis et la distance, **d,** de rive sont fixés.

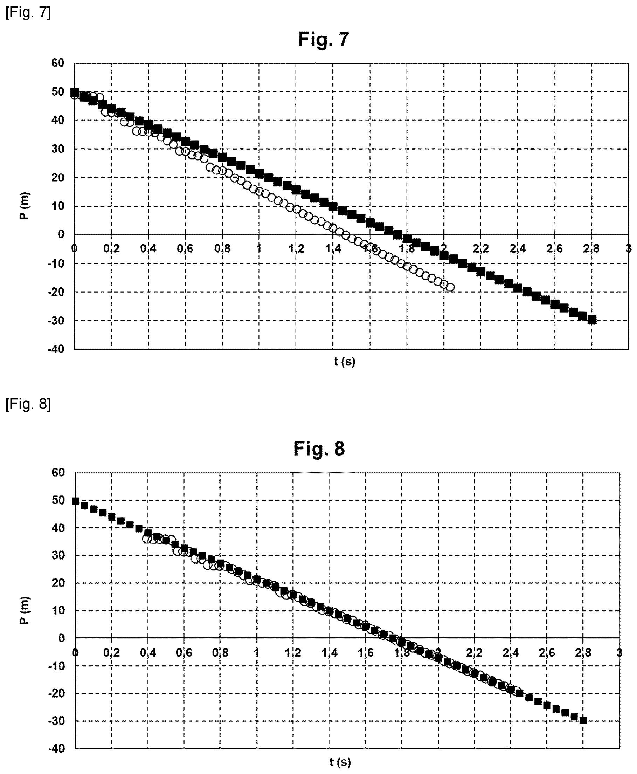

Sur la **Fig. 7,** sont représentées la position (exprimée en mètres), en fonction du temps (exprimé en secondes), d'un même véhicule **103** selon la caméra **201** (cercles vides) et selon le radar **202** (carrés noirs) du dispositif **101** de contrôle routier, chaque trajectoire étant formée d'une série temporelle de positions du véhicule **103** selon un axe [Ox) tangent à un bord de la route **102.** Les deux trajectoires ne coïncident pas.

Sur la **Fig. 8,** sont représentées les trajectoires de la **Fig. 7** après correction des paramètres de position et d'orientation de la caméra **201** par des valeurs corrigées calculées à l'aide du procédé selon l'invention. Dans cet exemple, les valeurs correctives suivantes ont été calculés :

- Angle, e, d'élévation : +0,11°

- Hauteur, h : -0,1 m

- Distance, d, de rive : -0,3 m

- Angle, r, roulis : -0.2°

Les corrections sont de l'ordre du dixième, voire centième de degré pour les angles, et du dixième de mètre pour les distances. Le décalage selon l'axe **[Ox)** des deux trajectoires radar et caméra est sensiblement réduit.

Dans un deuxième mode de réalisation, les données de position comprennent une série temporelle de distances du véhicule **103** par rapport au dispositif **101** de contrôle routier. Par « distance du véhicule par rapport au dispositif de contrôle routier », il est entendu la distance du véhicule par rapport à la caméra **201** ou au radar **202** dispositif **101** de contrôle routier, la caméra **201** et le radar **202** étant supposés suffisamment proches l'un de l'autre pour considérer que ces deux distances sont sensiblement égales.

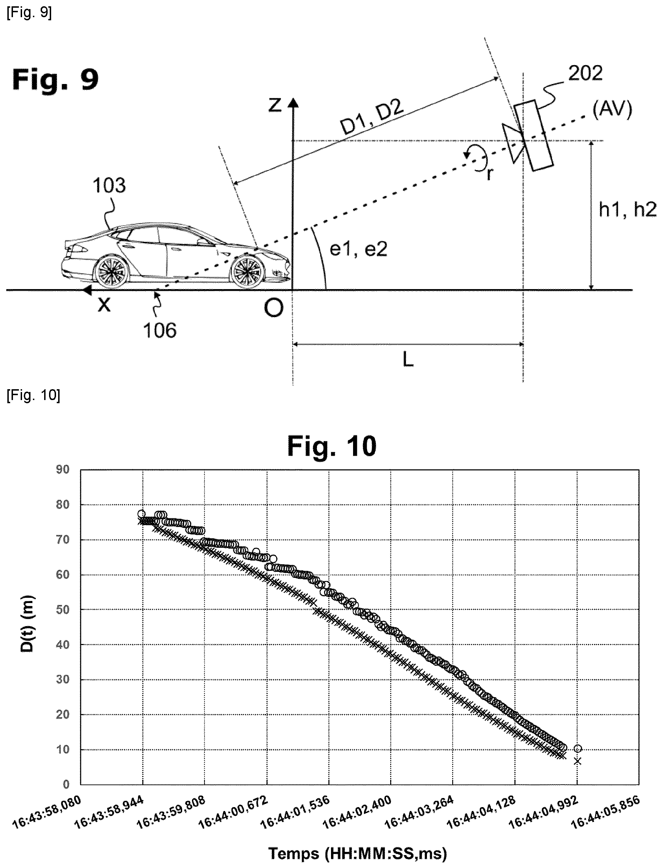

Sur à la **Fig. 9** est représentée schématiquement la distance d'un véhicule **103** par rapport au dispositif **101** de contrôle routier, par opposition à sa position selon l'axe **[Ox).** Les notations suivantes sont utilisées :
**D1** est la distance du véhicule **103** par rapport au dispositif **101** de contrôle routier obtenue par le radar **202.** Cette distance est réputée exacte puisque sa précision est indépendante de la hauteur et de l'angle d'élévation du radar. Une séquence temporelle de valeurs **D1(t)** pour chaque véhicule est acquise acquisition lors de l'étape **501** d'acquisition.

- **D2** est la distance du véhicule **103** par rapport au dispositif **101** de contrôle routier tel qu'obtenue par la caméra **201.** Avant calibration, la distance **D2** est généralement différente de la distance **D1.** Une séquence temporelle **D2(t)** pour chaque véhicule est acquise à l'étape **501** d'acquisition (moyennant, le cas échéant, une interpolation des valeurs de la séquence).

- **h1** est la hauteur exacte de la caméra **201,** sa valeur est inconnue.

- **h2=h1+∆h** est la hauteur estimée de la caméra **201,** sa valeur est connue lors de l'étape **501** d'estimation des paramètres de position et d'orientation. Le paramètre ∆h est le paramètre correctif de hauteur entre **h1** et **h2,** sa valeur est inconnue.

- **e1** est l'élévation exacte de la caméra, sa valeur est inconnue.

- **e2 = e1 + Δe** est l'élévation estimée de la caméra **201,** sa valeur est connue lors de l'étape **501** d'estimation des paramètres de position et d'orientation. Le paramètre **Δe** est le paramètre correctif d'élévation entre **e1** et **e2,** sa valeur est inconnue.

La disposition spatiale du dispositif **101** de contrôle routier par rapport à la route **102** induit que la hauteur **h1** et la distance **D1** sont grandes et l'angle, **e,** d'élévation, relativement petit. Ainsi, l'approximation **sin(e1) = e1** et **sin(e2) = e2** est-elle raisonnable, et par suite, **e1 = h1/D1** et **e2 = h2 / D2.**

Cette approximation permet la relation suivante :

$$D2 = \frac{h2}{e1 + \Delta e} = \frac{h2}{\left(\frac{h1}{D1}\right) + \Delta e}$$

Appliquée aux séquences temporelles **D1(t)** et **D2(t),** la relation précédente prend la forme suivante :

$$D1(t) * \frac{h2}{D2(t)} = h1 + \Delta e * D1(t)$$

Ainsi, selon le deuxième mode de réalisation, l'étape **504** de calcul des valeurs corrigées comprend une sous-étape **504d-1** de calcul du rapport **D1(t) \*h2/D2(t)** en fonction de **D1(t),** et une sous-étape **504d-2** de modélisation de ce rapport par une fonction affine dépendante de **D1(t).** Le coefficient directeur de la fonction affine correspond au paramètre correctif **Δe** d'élévation, et l'ordonnée à l'origine correspond au paramètre **h1,** c'est-à-dire à la valeur exacte de la hauteur de la caméra **102.** Dans une sous-étape **504d-3,** les valeurs corrigées, **h1** et **e1,** respectivement pour la hauteur **h,** et l'angle, **e,** d'élévation sont calculées.

Comme pour le premier mode de réalisation, le procédé **500** peut comprendre une étape **505** de mise à jour de l'angle, **r,** de roulis et de la distance, **d,** de rive, une fois les valeurs de la hauteur, **h,** et de l'angle, **e,** d'élévation corrigées à l'aide des valeurs corrigées calculées à l'étape **504.** Cette mise à jour réalisée en réitérant le procédé décrit dans FR 3131777 A1 [IDEMIA IDENTITY & SECURITY FRANCE [FR]] 14.07.2023, où tous les paramètres autres que l'angle, r, de roulis et la distance, d, de rive sont fixés.

Sur la **Fig. 10,** sont représentées les distances **D1(t)** (croix) et **D2(t)** (cercles vides), en fonction du temps, d'un même véhicule **103** par rapport à la caméra **201** et le radar **202** (en l'espèce un radar Doppler) du dispositif **101** de contrôle routier, chaque trajectoire étant formée d'une série temporelle de distances. Cette représentation graphique montre qu'avant calibration, les deux trajectoires ne coïncident pas.

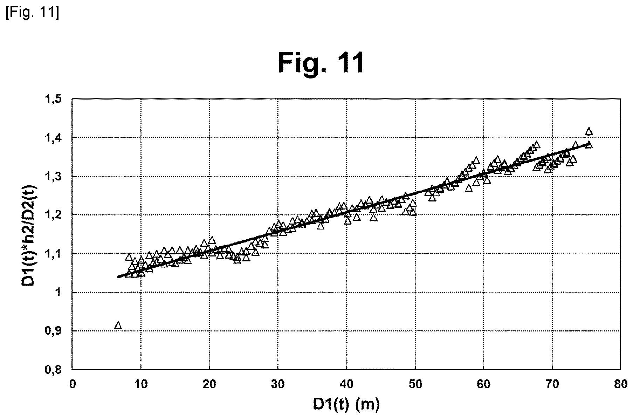

Sur la **Fig. 11,** sont représentées les variations du rapport **D1(t)\*h2/D2(t)** en fonction de **D1(t)** (triangles vides), calculées pour chaque instant d'acquisition, et sa modélisation par une fonction affine (droite en trait plein). La valeur obtenue du paramètre correctif d'élévation, correspondant au coefficient directeur de la fonction affine, est de 0,005 radian soit 0,29°, et la valeur de la hauteur **h1** de la caméra **201,** correspondant à l'ordonnée à l'origine de la fonction affine, est de 1,01 m.

Grâce au procédé de l'invention, les paramètres de de position et d'orientation de la caméra **201** sont déterminés avec une précision accrue. Le dispositif **101** de contrôle routier peut alors procéder des contrôles de vitesse, sur la base de sa caméra **201,** avec précision, répondant ainsi aux exigences des réglementations législatives et/ou administratives actuellement en vigueur.

**Revendications**

1. Procédé (500) de calibration d'un dispositif (101) de contrôle routier comprenant une caméra (201) et un radar (202), le procédé (500) comprenant les étapes suivantes :

   - estimer (501) les paramètres de position et d'orientation de la caméra (201) et du radar (202) dans un repère (O, x, y, z) lié à une voie (102a) d'une route (102) ;
   - acquérir (502), par la caméra (201) et le radar (202), les données relatives à la trajectoire d'au moins un même véhicule (103) sur voie (102a) de la route (102) ;
   - déterminer (503), d'une part, une trajectoire caméra du véhicule (103) dans le repère (O, x, y, z) lié à la voie (102a) de la route (102) à partir des données acquises par la caméra (201) et des paramètres de position et d'orientation estimés, et d'autre part, une trajectoire radar du véhicule (103) dans le repère (O, x, y, z) lié à la voie (102,a) de la route (102) à partir des données acquises par le radar (202) et des paramètres de position et d'orientation estimés ;
   - calculer (504), à partir de la trajectoire caméra et de la trajectoire radar, les valeurs corrigées d'au moins certains des paramètres de position et d'orientation estimés de la caméra (201), incluant un paramètre d'angle, e, d'élévation et un paramètre de hauteur, h, de ladite caméra (201).

2. Procédé (500) selon la revendication 1, tel que la trajectoire radar et la trajectoire caméra comprennent chacune des données de position du véhicule (103) dans le repère (0, x, y, z) lié à la voie (102a) de la route (102), acquises à des instants d'acquisition respectifs, et l'étape (504) de calcul des valeurs corrigées des paramètres comprend une sous-étape (504-i1) de correction des données de position du véhicule (103) de la trajectoire radar et de la trajectoire caméra pour des instants d'acquisition identiques.

3. Procédé (500) selon la revendication 2, tel que le radar (202) et la caméra (201) présentent des fréquences d'acquisition de données différentes, et la sous-étape (504-i1) de correction comprend une interpolation de l'une de la trajectoire cinémomètre et/ou de la trajectoire caméra de sorte que les deux trajectoires comprennent des données de position correspondant à des instants d'acquisition identiques.

4. Procédé (500) selon l'une quelconque des revendications 1 à 3, tel que l'étape (504) de calcul comprend le calcul des valeurs corrigées d'angle, e, d'élévation et de hauteur, h, et ledit procédé (500) comprend une étape (505) de mise à jour de la valeur de l'un au moins d'une distance, d, de rive et d'un angle, r, de roulis de la caméra (201) à partir desdites valeurs corrigées.

5. Procédé (500) selon l'une quelconque des revendications 1 à 4, tel que la trajectoire caméra et la trajectoire radar comprennent chacune une série temporelle de positions du véhicule selon un axe [Ox] du repère (O, x, y, z) lié à la voie (102a) de la route (102), l'axe [Ox] étant tangent à un bord de la voie (102a) de la route (102), et l'étape (504) de calcul des valeurs corrigées comprend le calcul de valeurs corrigées pour l'angle, e, d'élévation et de la hauteur, h, de la caméra (201), et une sous-étape (504c1) de minimisation des écarts de position entre les séries temporelles le trajectoire camera et de la trajectoire radar.

6. Procédé (500) selon l'une des revendications 1 à 4, tel que la trajectoire caméra et la trajectoire radar comprennent chacune une série temporelle de distances du véhicule (103) par rapport au dispositif (101) de contrôle routier, et l'étape (504) de calcul des valeurs corrigées pour les paramètres de position et d'orientation de la caméra (201) comprend une sous-étape (504c2) de minimisation à de cette distance sur l'ensemble desdites séries temporelles.

7. Procédé (500) selon la revendication 6, tel que l'étape (504) de calcul des valeurs corrigées comprend les sous-étape suivantes :

   - calculer (504d1) une quantité $D1(t)*H2/D2(t)$ en fonction de $D1(t)$, où $D1(t)$ est la séquence temporelle de distances du véhicule (103) par rapport au dispositif (101) de contrôle routier fournie par le radar (202), $D2(t)$ est la séquence temporelle de distances du véhicule (103) par rapport au dispositif (101) de contrôle routier fournie par la caméra (201), et $H2$ est la hauteur estimée de la caméra (201) ;
   - modéliser (504d2) la quantité $D1(t)*H2/D2(t)$ en fonction de $D1(t)$ par une fonction affine ;
   - calculer (504d3) un correctif sur l'angle, e, d'élévation à l'aide de la valeur du coefficient directeur de la fonction affine, la valeur corrigée de la hauteur, h, de la caméra (201) à partir de l'ordonnée à l'origine de la fonction affine.

8. Programme d'ordinateur, comprenant des instructions qui, lorsqu'elles sont exécutées par une unité de traitement de données, conduisent ledit dispositif à mettre en œuvre le procédé de code pour la mise en œuvre d'un procédé comprenant les étapes suivantes :

   - estimer (501) les paramètres de position et d'orientation de la caméra (201) et du radar (202) dans un repère (O, x, y, z) lié à une voie (102a) d'une route (102) ;
   - commander la caméra (201) et le radar (202) pour acquérir (502), par la caméra (201) et le radar (202), les données relatives à la trajectoire d'au moins un même véhicule (103) sur voie (102a) de la route (102) ;
   - déterminer (503), d'une part, une trajectoire caméra du véhicule (103) dans le repère (O, x, y, z) lié à la voie (102a) de la route (102) à partir des données acquises par la caméra (201) et des paramètres de position et d'orientation estimés, et d'autre part, une trajectoire radar du véhicule (103) dans le repère (O, x, y, z) lié à la voie (102a) de la route (102) à partir des données acquises par le radar (202) et des paramètres de position et d'orientation estimés ;
   - calculer (504), à partir de la trajectoire caméra et de la trajectoire radar, les valeurs corrigées d'au moins certains des paramètres de position et d'orientation estimés de la caméra (201), incluant un paramètre d'angle, e, d'élévation et un paramètre de hauteur, h, de ladite caméra (201).

9. Dispositif (101) de contrôle routier, comprenant une caméra (201), un radar (202), et une unité de traitement, le dispositif (101) de contrôle routier étant configuré pour mettre en œuvre le procédé de calibration selon l'une des revendications 1 à 7.

[Fig. 1]

**Fig. 1**

[Fig. 2]

**Fig. 2**

[Fig. 3]

Fig. 3

[Fig. 4]

Fig. 4

[Fig. 5]

**500**

Fig. 5

[Fig. 6]

**600**

Fig. 6

```
        ┌──────────┐
        │   501    │
        └──────────┘
             │
             ▼
        ┌──────────┐
        │   502    │
        └──────────┘
             │
  503        ▼
 ┌───────────────────────────┐
 │        ┌──────────┐        │
 │        │  503a    │        │
 │        └──────────┘        │
 │             │              │
 │             ▼              │
 │        ┌──────────┐        │
 │        │  503b    │        │
 │        └──────────┘        │
 └───────────────────────────┘
             │
  504        ▼
 ┌───────────────────────────────────┐
 │     ┌────────────┐                 │
 │     │            ▼                 │
 │  ┌────────┐   ┌────────┐           │
 │  │ 504a   │   │ 504-i1 │           │
 │  └────────┘   └────────┘           │
 │     │             │                │
 │     ▼             ▼                │
 │  ┌────────┐   ┌────────┐           │
 │  │ 504b   │   │ 504-i2 │           │
 │  └────────┘   └────────┘           │
 │     │                              │
 │     ▼                              │
 │  ┌────────────────────────────┐   │
 │  │ 504d1 / 504d2 / 504d3      │   │
 │  └────────────────────────────┘   │
 └───────────────────────────────────┘
             │
             ▼
        ┌──────────┐
        │   505    │
        └──────────┘
```

[Fig. 7]

## Fig. 7

[Fig. 8]

## Fig. 8

[Fig. 9]

# Fig. 9

[Fig. 10]

# Fig. 10

[Fig. 11]

# Fig. 11

EP 4 715 422 A1

## RAPPORT DE RECHERCHE EUROPEENNE

Europäisches Patentamt
European Patent Office
Office européen des brevets

**Numéro de la demande**

EP 25 19 1358

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2014/160027 A1 (IMAGE SENSING SYSTEMS INC [US]) 2 octobre 2014 (2014-10-02) | 1-6,8,9 | INV. G01S7/40 |
| A | * alinéas [0032], [0041], [0042], [0043], [0075]; figures 4A, 4B, 12, 14, 21 * | 7 | G01S13/86 G01S13/91 G06T7/70 G08G1/01 |
| | ----- | | G08G1/04 |
| X | DU YUCHUAN ET AL: "A Novel Spatio-Temporal Synchronization Method of Roadside Asynchronous MMW Radar-Camera for Sensor Fusion", IEEE TRANSACTIONS ON INTELLIGENT TRANSPORTATION SYSTEMS, IEEE, PISCATAWAY, NJ, USA, vol. 23, no. 11, 1 novembre 2022 (2022-11-01), pages 22278-22289, XP011926403, ISSN: 1524-9050, DOI: 10.1109/TITS.2021.3119079 [extrait le 2021-10-27] | 1-3 | |
| A | * page 22279; page 22282; page 22280; figures 1, 2, 3 * | 7 | |
| | ----- | | |
| A | EP 4 212 825 A1 (IDEMIA IDENTITY & SECURITY FRANCE [FR]) 19 juillet 2023 (2023-07-19) * alinéas [0001], [0072]; figure 5a * | 4 | |
| | ----- | | |
| A | KR 2022 0089567 A (LIVESECU CO LTD [KR]) 28 juin 2022 (2022-06-28) * equation 3; alinéas [0004], [0013], [0071], [0072], [0073]; figure 7 * | 7 | |
| | ----- | | |

**DOMAINES TECHNIQUES RECHERCHES (IPC)**

G01S
G08G
G06T

Le présent rapport a été établi pour toutes les revendications

| Lieu de la recherche | Date d'achèvement de la recherche | Examinateur |
|---|---|---|
| Munich | 10 décembre 2025 | Kirscher, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

17

## ANNEXE AU RAPPORT DE RECHERCHE EUROPEENNE
## RELATIF A LA DEMANDE DE BREVET EUROPEEN NO.

EP 25 19 1358

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-12-2025

| Document brevet cité au rapport de recherche | Date de publication | Membre(s) de la famille de brevet(s) | Date de publication |
|---|---|---|---|
| WO 2014160027   A1 | 02-10-2014 | AUCUN | |
| EP 4212825      A1 | 19-07-2023 | EP      4212825 A1<br>FR      3131777 A1 | 19-07-2023<br>14-07-2023 |
| KR 20220089567  A | 28-06-2022 | AUCUN | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3096786 A1

- FR 3131777 A1